# EUROPEAN PATENT SPECIFICATION

(11) **EP 3 530 995 B1**
(45) Date of publication and mention of the grant of the patent: **12.02.2020**
(21) Application number: 18177350.8
(22) Date of filing: 12.06.2018
(51) Int. Cl.: F16K 1/44, F16K 27/02, F16K 31/06, F03D 9/25, F04B 53/10, F15B 13/00, F03D 15/00, F16H 61/4192

(54) **POPPET VALVE, HYDRAULIC MACHINE, HYDRAULIC TRANSMISSION, RENEWABLE-ENERGY TYPE POWER GENERATING APPARATUS, AND METHOD OF PRODUCING POPPET VALVE**
SITZVENTIL, HYDRAULISCHE MASCHINE, HYDRAULISCHES GETRIEBE, STROMGENERATOR MIT ERNEUERBARER ENERGIE UND VERFAHREN ZUR HERSTELLUNG EINES SITZVENTILS
SOUPAPE À CHAMPIGNON, MACHINE HYDRAULIQUE, TRANSMISSION HYDRAULIQUE, APPAREIL DE GÉNÉRATION DE PUISSANCE DE TYPE À ÉNERGIE RENOUVELABLE ET PROCÉDÉ DE PRODUCTION D'UNE SOUPAPE À CHAMPIGNON

(30) Priority: 26.02.2018 JP 2018032429
(43) Date of publication of application: 28.08.2019
(73) Proprietor: Mitsubishi Heavy Industries, Ltd., Tokyo 108-8215 (JP)
(72) Inventor: HAYASHI, Toshikazu, Tokyo, 108-8215 (JP); YUGE, Atsushi, Tokyo, 108-8215 (JP); NOMAGUCHI, Hiroyuki, Tokyo, 108-8215 (JP); HIRANO, Haruhiko, Tokyo, 108-8215 (JP); TANAKA, Shingo, Tokyo, 108-8215 (JP)
(74) Representative: Henkel & Partner mbB

(56) References cited:
- EP-A1- 3 106 724
- EP-A1- 3 211 276
- DE-A1-102014 224 357
- DE-U1-202010 006 187

## Description

### TECHNICAL FIELD

The present disclosure relates to a poppet valve, a hydraulic machine including the poppet valve, a hydraulic transmission including the hydraulic machine, a renewable-energy type power generating apparatus including the hydraulic mission, and a method of producing a poppet valve.

### BACKGROUND ART

A wind turbine power generating apparatus, which is a renewable-energy type power generating apparatus, may include a hydraulic transmission. A hydraulic transmission uses pressurized oil to convert rotational energy of a rotor that rotates in response to a wind force into mechanical energy, and thereby drives a generator.

JP 2017-151020 A or EP 3211276 A1, on which the preamble portion of claim 1 is based and which was previously proposed by the present applicant, discloses a hydraulic transmission for a wind turbine power generating apparatus including a hydraulic pump configured to be driven by a rotor and pressurize working oil, and a hydraulic motor configured to drive a generator with high pressure oil supplied from the hydraulic pump through a high pressure oil flow passage. The hydraulic transmission is configured to return low pressure oil after driving the generator to the hydraulic pump via a low pressure oil flow passage. The hydraulic pump and the hydraulic motor each include a working chamber formed by a cylinder and a piston, and a poppet valve (solenoid valve) for controlling a communication state between the working chamber and the high pressure oil flow passage or the low pressure oil flow passage.

JP 2017-151020 A discloses a diagnosis system in which, to prevent response delay of a magnetic poppet (valve body) caused by a fitting effect or residual magnetism between the poppet and a magnetic valve casing that makes contact with the poppet on a valve opening operation of the poppet, a plate member (position-restricting part) is disposed between the poppet and the valve casing. Accordingly, direct contact between the poppet and the valve casing is avoided to improve the responsiveness of the poppet, and damage such as wear and settling of the position-restricting part, for instance, can be detected from a change in response delay of the poppet.

Furthermore, JP 2017-008975 A discloses providing an uneven portion on an end surface of a poppet (valve body) or a contact surface of a valve casing that makes contact with the poppet, to address deterioration of the responsiveness of the poppet valve due to a differential pressure between the front side and the back side of the poppet valve on a valve opening or closing operation of the poppet. With this uneven portion, a space is formed between the poppet and the contact surface. Accordingly, the differential pressure between the front side and the back side of the poppet is reduced, and thereby deterioration of the responsiveness of the poppet can be suppressed.

DE 102014224357 A1 discloses a gas injector for injecting gaseous fuels directly into the combustion space of an internal combustion engine wherein the seat of the injector is a conical surface and the valve body is a corresponding needle with a tapered or conical end. This document discloses a contact arrangement for the valve body in a situation where the valve body of a first component has a higher surface hardness than that of a second component by at least 50 percent bur no more than 500 percent. The surface hardness of the first component is defined to be approximately 100 Hv and the surface hardness of the second component is preferably about 200 Hv to 300 Hv.

DE 202010006187 U1 discloses a solenoid valve in which a surface coating on a protection layer with surface hardness's of at least 500 Hv can be formed by various processes including a thermal spray coating.

### SUMMARY

As disclosed in JP 2017-151020 A, in a case where a non-magnetic plate member (position-restricting part) is disposed between a poppet and a valve casing, which are both magnetic, aging such as wear and settling of the position-restricting part may cause response delay of the poppet. This is because, aging such as wear and settling of the position-restricting part increases separation resistance between the poppet and the valve casing. Furthermore, due to damage such as breakage of the position-restricting part, a fragment may enter the clearance between the poppet and the valve casing, and may cause juddering.

Although JP 2017-008975 A discloses a diagnosis system capable of detecting damage in the position-restricting part, it does not disclose an approach for suppressing damage in the position-restricting part.

In view of the above problem, an object of the invention is to suppress response delay of a poppet due to aging or damage in a position-restricting part.
(1) A poppet valve according to the invention includes the features of claim 1 comprising: a valve seat; a poppet disposed so as to face the valve seat; an actuator for driving the poppet; a first valve casing which houses the actuator and which includes a contact surface capable of making contact with an end surface of the poppet opposite to the valve seat, on a valve-opening operation of the poppet; and a thermally sprayed layer including a non-magnetic material, formed on at least a part of the end surface of the poppet or the contact surface of the first valve casing. A Vickers hardness Hv1 of the end surface of the poppet or the contact surface of the first valve casing and a Vickers hardness Hv2 of the thermally sprayed layer satisfy a relationship (Hv1-50Hv)<Hv2<(Hv1+100Hv).
   In the present invention, "an end surface of the poppet opposite to the valve seat" refers to an end surface that is further from the valve seat, of the two surfaces of the poppet in the moving direction of the poppet.
   In the above configuration (1), the end surface of the poppet and the contact surface of the first valve casing make contact with each other via the thermally sprayed layer when the poppet valve is in a valve open state, and separate from each other by a valve-closing operation of the poppet. Thus, the thermally sprayed layer often makes contact with and separates from the contact surface of the first valve casing or the poppet end surface, and thus in an environment in which aging such as wear and settling is likely to occur.
   With the above configuration (1), the thermally sprayed layer, the poppet end surface and the contact surface of the first valve casing satisfy the above relationship of hardness, and thus have a substantially equivalent hardness. Thus, it is possible to suppress aging of the thermally sprayed layer even in the above environment. Thus, it is possible to suppress response delay of the poppet due to aging of the thermally sprayed layer. Furthermore, it is possible to suppress an event in which, due to damage to the thermally sprayed layer, a fragment enters the clearance between the poppet and the valve casing and causes juddering.
   Furthermore, the thermally sprayed layer including a non-magnetic material is interposed between the poppet end surface and the contact surface of the first valve casing, and thus it is possible to reduce the attractive force due to magnetism remaining on the poppet or the first valve casing on a closing operation of the poppet, which also improves the responsiveness of the poppet.
(2) In the invention, a base material of the non-magnetic material of the thermally sprayed layer has a Vickers hardness of not less than 450.
   With the above configuration (2), with the above thermally sprayed layer including a non-magnetic base material that has a high Vickers hardness Hv of not less than 450, it is possible to suppress aging of the thermally sprayed layer, which makes it possible to suppress response delay of the poppet due to aging of the thermally sprayed layer.
(3) In a preferred embodiment, in the above configuration (1), a Rockwell hardness of the thermally sprayed layer after formation of a coating is not less than 45.
   With the above configuration (3), with the thermally sprayed layer after forming a coating having a high Rockwell hardness HRC of not less than 45, it is possible to suppress aging of the thermally sprayed layer, which makes it possible to suppress response delay of the poppet due to aging of the thermally sprayed layer.
(4) In preferred embodiments, in any one of the above configurations (1) to (3), the thermally sprayed layer has a layer thickness of not less than 1mm.
   With the above configuration (4), with the thermally sprayed layer having a layer thickness of not less than 1mm, it is possible to maintain the strength of the thermally sprayed layer and thereby suppress aging of the thermally sprayed layer, which makes it possible to suppress response delay of the poppet due to aging of the thermally sprayed layer.
(5) In a preferred embodiment, in any one of the above configurations (1) to (4), the thermally sprayed layer includes a cobalt-chromium alloy also containing tungsten, a nickel alloy, or a tungsten alloy.
   A cobalt-chromium alloy also containing tungsten (e.g. Stellite®) has a Vickers hardness of 500 to 650Hv, and a nickel alloy and a tungsten alloy have a Vickers hardness of 600 to 700Hv, each having a high hardness. Thus, with the thermally sprayed layer including one of the above materials, it is possible to suppress aging of the thermally sprayed layer, which makes it possible to suppress response delay of the poppet due to aging of the thermally sprayed layer.
(6) In a preferred embodiment, in any one of the above configurations (1) to (5), the poppet valve further includes a biasing member for biasing the poppet toward the valve seat. The poppet and the first valve casing are both at least partially formed by a magnetic element, and the actuator includes a solenoid configured to, in an excited state, generate an electromagnetic force which attracts the poppet toward the first valve casing, against a biasing force of the biasing member.
   In a case where the poppet valve is a normally-closed type solenoid valve as described in the above (6), the responsiveness of the valve-closing operation may decrease due to an attractive force generated by the residual magnetism of the valve casing, even if power supply to the solenoid is stopped on a valve-closing operation.
   Thus, in a case where the above configuration (1) is applied to a normally-closed type solenoid valve, by forming the thermally sprayed layer between the poppet end surface in the valve-open position and the contact surface (magnetic-attractive surface) of the first valve casing, it is possible to reduce an attractive force due to residual magnetism, and to improve the responsiveness of the valve operation (e.g. the valve-closing response speed).
(7) In a preferred embodiment, in any one of the above configurations (1) to (6), the contact surface of the first valve casing or the end surface of the poppet capable of making contact with the thermally sprayed layer includes an uneven portion configured to form a space between the thermally sprayed layer and the contact surface of the first valve casing or the end surface of the poppet.
   If the thermally sprayed layer makes close surface-contact with the contact surface of the first valve casing or the poppet end surface in a valve-opened state, when the thermally sprayed layer separates from the contact surface of the first valve casing or the poppet end surface on a valve closing operation, brief expansion occurs in the space between the thermally sprayed layer and the contact surface of the first valve casing or the poppet end surface, which reduces the pressure and generates a pressure differential between the thermally sprayed layer and the valve-seat side surface of the poppet. This pressure differential leads to deterioration of responsiveness in a valve-closing operation. Similarly, on a valve-opening operation, when the end surface of the poppet approaches the contact surface of the first valve casing, brief compression may occur in the space between the above surfaces to increase the pressure, and the responsiveness of the valve-opening operation may deteriorate due to a pressure differential created between the end surface of the poppet and the valve-seat side surface.
   With the above configuration (7), it is possible to suppress deterioration of responsiveness of the valve operation due to a pressure differential caused between the poppet end surface and the valve-seat side surface when the poppet is activated. Specifically, when the thermally sprayed layer moves away from the poppet end surface or the contact surface of the first valve casing on a valve-closing operation, it is possible to suppress a rapid pressure decrease in the gap between the thermally sprayed layer and the poppet end surface or the contact surface of the first valve casing thanks to the presence of the space, which makes it possible to suppress deterioration of responsiveness in a valve-closing operation due to a pressure differential between the poppet end surface and the valve-seat side surface. Similarly, on a valve-opening operation, when the thermally sprayed layer moves toward the poppet end surface or the contact surface of the first valve casing, it is possible to suppress a rapid pressure increase in the gap between the thermally sprayed layer and the poppet end surface or the contact surface of the first valve casing thanks to the presence of the space, which makes it possible to suppress deterioration of responsiveness of a valve-opening operation due to a pressure differential between the poppet end surface and the valve-seat side surface.
   Further, in a case where the thermally sprayed layer is in contact with the poppet end surface or the contact surface of the first valve casing, and the fluid around the poppet is capable of flowing into the space, it is possible to reduce a pressure differential between the poppet end surface and the valve-seat side surface even further, and improve the responsiveness of the valve operation more effectively.
   Further, since it is possible to reduce the contact area between the thermally sprayed layer and the poppet end surface or the contact surface of the first valve casing with the space, it is possible to achieve a structure such that it is difficult for the thermally sprayed layer to be in close contact with the poppet end surface or the contact surface of the first valve casing. Accordingly, it is possible to suppress deterioration of responsiveness in a valve-closing operation.
(8) In a preferred embodiment, in the above configuration (7), the uneven portion is formed by a plurality of first grooves and a plurality of second grooves intersecting with the first grooves, so as to have a mesh shape.
   With the above configuration (8), it is possible to form myriad minute uneven sections easily or to form a uniform uneven section over a wide range. Thus, it is possible to securely reduce a pressure differential generated between the end surface of the poppet and the valve-seat side surface on a valve operation and to improve the responsiveness of the valve operation effectively. Further, it is possible to achieve a structure such that the unevenness forming surface can hardly be damaged by collision between the thermally sprayed layer and the poppet end surface or the contact surface of the first valve casing.
(9) In a preferred embodiment, in the above configuration (8), an arithmetic average roughness Ra of a surface of a protruding portion constituting the uneven portion is not greater than 0.05.
   With the above configuration (9), in a case where the protruding portion constitutes the uneven portion formed on the contact surface of the first valve casing or the poppet end surface which repeatedly makes contact with or separates from the thermally sprayed layer, with the protruding portion having a surface whose arithmetic average roughness Ra is not greater than 0.05, which means that the surface is smooth, it is possible to suppress aging such as wear and settling of the thermally sprayed layer.
(10) In a preferred embodiment, in the above configuration (8) or (9), a protruding portion constituting the uneven portion has a rectangular outer shape in a view along a height direction of the protruding portion, and a length L of a side of the rectangular and a width of the first grooves and the second grooves satisfy a relationship 0.7W≤L≤1.3W.
   With the above configuration (10), the length L of a side of the rectangular and the width W of the first grooves and the second grooves satisfy a relationship 0.7W≤L≤1.3W, and thus it is possible to suppress slant contact with the surface of the thermally sprayed layer, which makes it possible to suppress aging such as wear and settling of the thermally sprayed layer.
(11) In a preferred embodiment, in the above configuration (7), the uneven portion is formed to have a dimple shape.
   With the above configuration (11), the uneven portion having a dimple shape is formed on the contact surface of the first valve casing or the poppet end surface which repeatedly makes contact with or separates from the thermally sprayed layer, and thereby it is possible to suppress slant contact with the surface of the thermally sprayed layer, which makes it possible to suppress aging such as wear and settling of the thermally sprayed layer, as well as facilitate machining of the uneven portion to form the uneven portion at low cost.
(12) In a preferred embodiment, in any one of the above configurations (7) to (11), the poppet valve is configured to be openable and closeable so as to switch a pressure inside a working chamber of a hydraulic machine, and the uneven portion is formed by a drain groove for working oil of the hydraulic machine, the drain groove being disposed on at least one of the end surface of the poppet or the contact surface of the first valve casing.
   With the above configuration (12), when the thermally sprayed layer moves in a direction away from the contact surface of the first valve casing or the poppet end surface on a valve closing operation, the pressure of the surface of the thermally sprayed layer decreases. At this time, working oil of the hydraulic machine is supplied to the drain groove formed by the uneven portion, and thus the pressure decrease of the surface of the thermally sprayed layer is suppressed. Accordingly, it is possible to suppress a pressure differential between the poppet end surface and the valve-seat side surface, and thus it is possible to suppress response delay of the poppet.
(18) A hydraulic machine for use in a renewable-energy type power generating apparatus according to the present invention includes: a cylinder; a piston which reciprocates inside the cylinder; and the poppet valve according to the invention configured to control a communication state between an external flow passage and a working chamber formed by the cylinder and the piston.
   The hydraulic machine having the above configuration (18) includes the poppet valve with an excellent responsiveness as described above, and thus it is possible to improve the reliability of the hydraulic machine.
(19) A hydraulic transmission includes: a hydraulic pump for generating a high pressure oil; a hydraulic motor configured to be driven by the high pressure oil supplied from the hydraulic pump; a high pressure oil flow passage for supplying the high pressure oil from the hydraulic pump to the hydraulic motor; and a low pressure oil flow passage for returning low pressure oil discharged from the hydraulic motor to the hydraulic pump. At least one of the hydraulic pump or the hydraulic motor comprises the hydraulic machine according to the above (18).
   The hydraulic transmission having the above configuration (19) produces high pressure oil with the hydraulic pump, and drives the hydraulic motor with the high pressure oil. At least one of the hydraulic pump or the hydraulic motor includes a hydraulic machine having a high responsiveness, which makes it possible to improve reliability of the hydraulic transmission.
   Generally, the hydraulic motor for driving a generator is required to operate with a high reliability under harsh operational conditions of approximately 1000rpm, for instance. Thus, as described above, by providing the poppet valve with the above responsiveness, it is possible to secure a high reliability which can meet the requirement of the hydraulic motor for driving a generator.
(20) A renewable-energy type power generating apparatus according to the invention includes the features of claim 9 comprising: a rotor configured to receive renewable energy and rotate; the hydraulic transmission according to the above (19); a generator configured to be driven by the hydraulic motor. The hydraulic pump is configured to be driven by the rotor and produce the high pressure oil, and the hydraulic motor is configured to drive the generator with the high pressure oil supplied from the hydraulic pump.
   With the above configuration (20), at least one of the hydraulic pump or the hydraulic motor constituting the hydraulic transmission includes the hydraulic machine including the poppet valve having a high reliability, and thus the wind turbine power generating apparatus can be operated stably as a renewable energy type power generating apparatus.
(21) A method according to the invention of producing a poppet valve which comprises: a valve seat; a poppet disposed so as to face the valve seat; an actuator for driving the poppet; and a first valve casing which houses the actuator and which includes a contact surface capable of making contact with an end surface of the poppet opposite to the valve seat, includes the features of claim 10 comprising: a thermal spraying step of forming a thermally sprayed layer including a non-magnetic material on at least a part of the end surface of the poppet valve or the contact surface of the valve casing. A Vickers hardness Hv1 of the end surface of the poppet and a Vickers hardness Hv2 of the thermally sprayed layer satisfy a relationship (Hv1-50Hv)≤Hv2≤(Hv1+100Hv).
   According to the above method (21), a thermally sprayed layer including a non-magnetic material is formed on at least a part of the end surface of the poppet or the contact surface of the first valve casing. The thermally sprayed layer, the poppet end surface and the contact surface of the first valve casing satisfy the above relationship of hardness, and thus have a substantially equivalent hardness. Thus, it is possible to suppress aging of the thermally sprayed layer even in the above environment. Thus, it is possible to suppress response delay of the poppet due to aging of the thermally sprayed layer. Furthermore, it is possible to suppress an event in which, due to damage to the thermally sprayed layer, a fragment enters the clearance between the poppet and the valve casing and causes juddering.
   Furthermore, the thermally sprayed layer including a non-magnetic material is interposed between the poppet end surface and the contact surface of the first valve casing, and thus it is possible to reduce an attractive force due to magnetism remaining on the poppet or the valve casing on a closing operation of the poppet, which also improves the responsiveness of the poppet.
(22) In a preferred embodiment, in the above method (21), the method further includes a step of forming an uneven portion on the contact surface of the first valve casing or the end surface of the poppet valve capable of making contact with the thermally sprayed layer, and forming a space between the thermally sprayed layer and the contact surface of the first valve casing or the end surface of the poppet valve with the uneven portion.
   According to the above method (22), with the space being formed by the uneven portion formed on the contact surface of the first valve casing or the poppet end surface which repeatedly makes contact with or separates from the thermally sprayed layer, it is possible to suppress a differential pressure generated between the poppet end surface and the valve-seat side surface on a valve-closing operation and a valve-opening operation of the poppet, and suppress deterioration of responsiveness in a valve operation due to the pressure differential.
(23) In a preferred embodiment, in the above method (21) or (22), the thermal spraying step includes forming the thermal spraying layer on at least a part of the end surface of the poppet or the contact surface of the first valve casing by high velocity oxygen fuel (HVOF) combustion spraying.

According to the above method (22), by forming the thermally sprayed layer by using the HVOF combustion spraying, it is possible to form a high density coating with a low porosity. Furthermore, it is possible to obtain a thermally sprayed layer which has a uniform hardness and which undergoes less aging.

In some embodiments, it is possible to suppress response delay and juddering of a poppet due to aging and damage such as wear and settling of the thermally sprayed layer formed on the poppet end surface or the contact surface of the first valve casing to be in contact with the poppet end surface.

### BRIEF DESCRIPTION OF DRAWINGS

FIG. 1 is an overall configuration diagram of a wind turbine power generating apparatus according to an embodiment.
FIG. 2 is a schematic configuration diagram of a hydraulic machine according to an embodiment.
FIG. 3 is a schematic cross-sectional configuration diagram of a high pressure valve and a low pressure valve according to an embodiment.
FIG. 4 is a vertical cross-sectional configuration view of a poppet valve according to an embodiment.
FIG. 5 is a vertical cross-sectional configuration view of a poppet valve according to an embodiment.
FIG. 6 is a partial enlarged view of FIG. 5.
FIG. 7 is a planar view of a poppet according to an embodiment.
FIG. 8A is a planar configuration diagram of an uneven portion according to an embodiment.
FIG. 8B is a cross-sectional configuration diagram of an uneven portion according to an embodiment.
FIG. 9A is a planar configuration diagram of an uneven portion according to an embodiment.
FIG. 9B is a cross-sectional configuration diagram of an uneven portion according to an embodiment.
FIG. 10 is a vertical cross-sectional configuration view of a poppet valve according to an embodiment.
FIG. 11 is a vertical cross-sectional configuration view of a poppet valve according to an embodiment.
FIG. 12 is a vertical cross-sectional configuration view of a poppet valve according to an embodiment.
FIG. 13 is a flowchart of a method of producing a poppet valve according to an embodiment.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not intended to limit the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

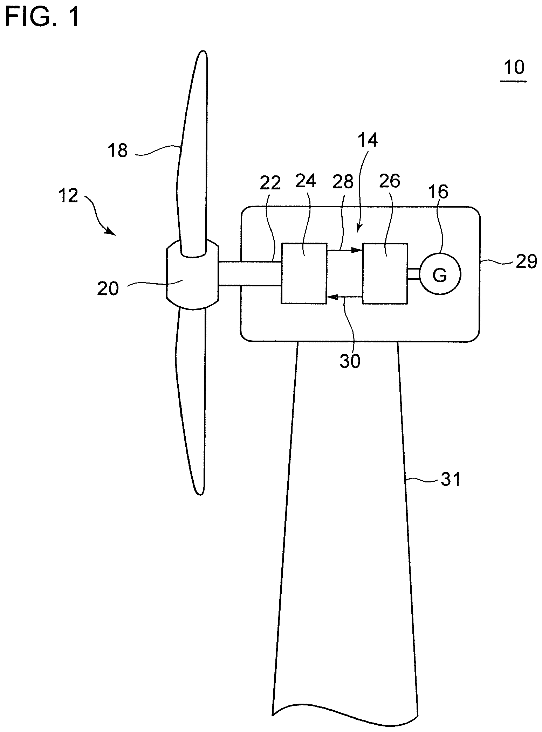

FIG. 1 is a schematic diagram of a wind turbine power generating apparatus 10 according to an embodiment. As illustrated in the drawing, the wind turbine power generating apparatus 10 includes a rotor 12 configured to rotate in response to wind, which is a renewable energy, a hydraulic transmission 14 for transmitting rotation of the rotor 12, and a generator 16 for generating electric power.

The rotor 12 includes at least one blade 18, and a hub 20 to which the at least one blade 18 is mounted.

The hydraulic transmission 14 includes a hydraulic pump 24 coupled to the rotor 12 via a rotational shaft 22 and configured to generate high pressure oil, a hydraulic motor 26 configured to be driven by the high pressure oil supplied from the hydraulic pump 24, a high pressure oil flow passage 28 for supplying high pressure oil from the hydraulic pump 24 to the hydraulic motor 26, and a low pressure oil flow passage 30 for returning low pressure oil discharged from the hydraulic motor 26 to the hydraulic pump 24.

The generator 16 is coupled to the hydraulic motor 26 via an output shaft of the hydraulic motor 26. For instance, the generator 16 is a synchronous generator driven by the hydraulic motor 26, and is connected to a utility grid.

In an embodiment, the hydraulic transmission 14 and the generator 16 are disposed inside a nacelle 29 disposed on an upper part of the tower 31.

The rotational energy of the rotor 12 is inputted into the generator 16 via the hydraulic transmission 14 including the hydraulic pump 24 and the hydraulic motor 26, and electric power is generated by the generator 16.

When the at least one blade 18 receives wind, the entire rotor 12 rotates due to the power of the wind, so that the hydraulic pump 24 is driven by the rotor 12 to pressurize working oil, thereby producing high pressure working oil (pressurized oil). The pressurized oil produced by the hydraulic pump 24 is supplied to the hydraulic motor 26 via the high pressure oil flow passage 28, and drives the hydraulic motor 26. Electric power is generated by the generator 16 connected to the hydraulic motor 26 via the output shaft. The low pressure working oil having performed work in the hydraulic motor 26 returns to the hydraulic pump 24 via the low pressure oil flow passage 30.

The hydraulic pump 24 and the hydraulic motor 26 may be of a variable-displacement type whereby the displacement is adjustable.

In some embodiments, at least one of the above described hydraulic pump 24 or the hydraulic motor 26 is a hydraulic machine 40 described below.

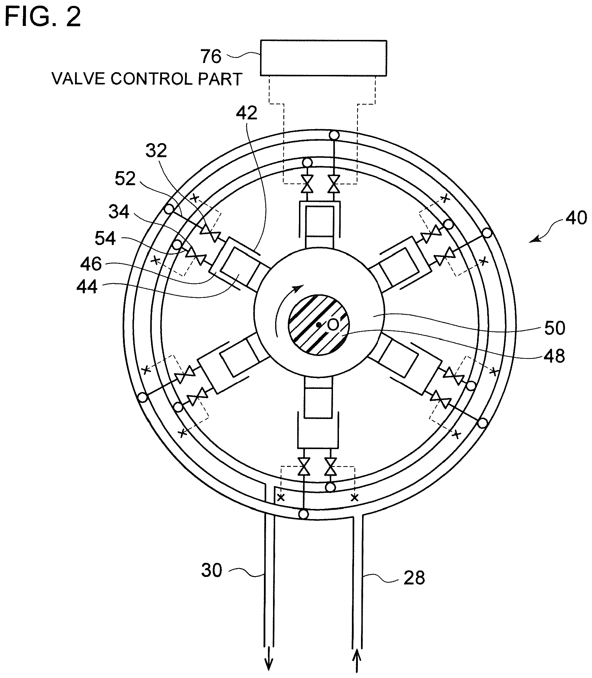

FIG. 2 is a schematic configuration diagram of a hydraulic machine 40 according to an embodiment. As a basic configuration, the hydraulic machine 40 includes at least one cylinder 42 and a piston which reciprocates inside the cylinder 42. The cylinder 42 and the piston 44 form a working chamber 46. The working chamber 46 is in communication with a high pressure oil flow passage 28 and a low pressure oil flow passage 30 (external passage). A high pressure valve 32 is disposed in the high pressure oil flow passage 28, and a low pressure valve 34 is disposed in the low pressure oil flow passage 30. As the high pressure valve 32 and the low pressure valve 34 open and close, the communication state between the working chamber 46 and the high pressure oil flow passage 28 and the low pressure oil flow passage 30 is controlled.

The hydraulic machine 40 further includes a rotational shaft 48, and a cam 50 (conversion mechanism) for converting rotational motion of the rotational shaft 48 and reciprocal motion of the piston 44, or vice versa. The cam 50 is an eccentric cam disposed eccentrically from the axial center O of the rotational shaft 48. While the piston 44 performs a set of upward and downward movement, the rotational shaft 48 to which the cam 50 is mounted performs one revolution.

In an embodiment, as shown in FIG. 2, a plurality of cylinders 42 and a plurality of pistons 44 are disposed along the circumferential direction of the hydraulic machine 40.

In the hydraulic machine 40 depicted in FIG. 2, the high pressure valves 32 and the low pressure valves 34 are controlled in accordance with reciprocal motion of the pistons 44, so that a pressure of each working chamber 46 changes periodically in accordance with the reciprocal motion of the pistons 44. Now, configuration of the high pressure valve 32 and the low pressure valve 34 of the hydraulic machine 40 will be described, along with a periodical change of the working chamber pressure caused by opening-and-closing control on the valves.

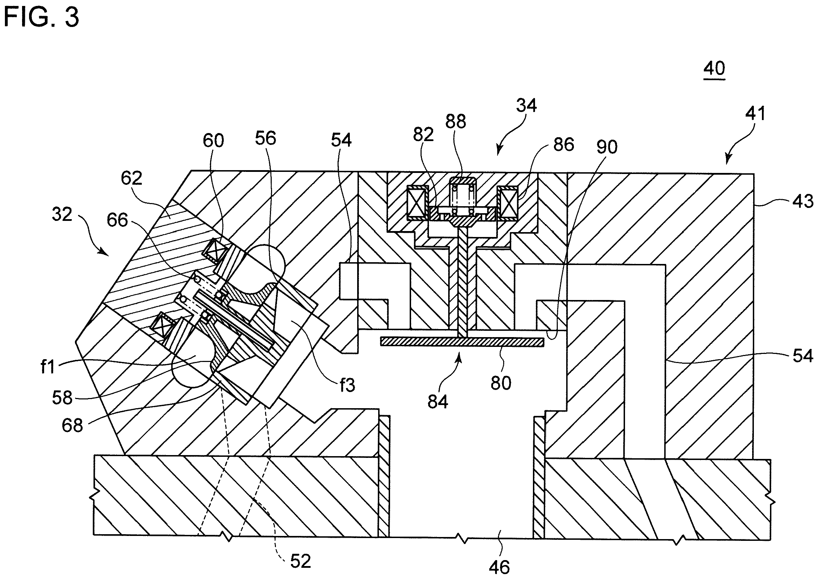

FIG. 3 is a schematic cross-sectional view of a configuration of the high pressure valve 32 and the low pressure valve 34. In the example depicted in FIG. 3, both of the high pressure valve 32 and the low pressure valve 34 are solenoid valves, and FIG. 3 is a view of a situation in which the high pressure valve 32 is closed and the low pressure valve 34 is open. In some embodiments, as depicted in FIG. 3, the high pressure valve 32, the low pressure valve 34, and a casing 43 housing the valves may be unitized and configured as a valve unit 41.

The high pressure valve 32 illustrated in FIG. 3 includes an actuator 60 for moving the valve body 58 between a valve-open position and a valve-closed position, a biasing member 66, and a valve seat 56. The high pressure valve 32 is a poppet solenoid valve of a normally-closed type, with the valve seat 56 disposed on a side adjacent to the working chamber 46 with respect to the valve body 58. The high pressure valve 32 is capable of switching the communication state between the working chamber 46 and the high pressure oil flow passage 28 (see FIG. 2) through an opening-and-closing operation of the valve body 58.

In an embodiment, the actuator 60 is a solenoid coil, and the biasing member 66 is a spring. The valve body 58 includes a valve body having a poppet shape.

The low pressure valve 34 illustrated in FIG. 3 includes a movable unit 84 including a valve body 80 and an armature 82, a solenoid coil 86, a spring 88, and a valve seat 90. The low pressure valve 34 is a poppet solenoid valve (poppet valve) of normally-open type, with the valve body 80 disposed on the side adjacent to the working chamber 46 with respect to the valve seat 90. The low pressure valve 34 is capable of switching the communication state between the working chamber 46 and the low pressure oil flow passage 30 (see FIG. 2) by movement of the movable unit 84 caused by an electromagnetic force of the solenoid coil 86 or a biasing force of the spring 88.

The high pressure valve 32 and the low pressure valve 34 are controlled to open and close with control signals (open-close command) sent from a valve control part 76. In some embodiments, the valve control part 76 provides the high pressure valve 32 and the low pressure valve 34 with control signals for the open-close command.

In a case where the hydraulic machine 40 is applied to the hydraulic pump 24, the rotational shaft 48 is connected to the rotational shaft 22 of the rotor 12. As the rotational shaft 22 rotates, the rotational shaft 48 rotates. In response to rotation of the rotational shaft 48, the piston 44 reciprocates inside the working chamber 46 and thereby high pressure oil is generated. The generated high pressure oil is supplied to the hydraulic motor 26 via the high pressure oil flow passage 28.

In a case where the hydraulic machine 40 is applied to the hydraulic motor 26, the rotational shaft 48 is coupled to the generator 16. The rotational shaft 48 is rotated by high pressure oil supplied to the plurality of working chambers 46 in sequence from the high pressure oil flow passage 28. In response to rotation of the rotational shaft 48, the generator 16 generates electric power.

In an embodiment, as shown in FIG. 2, the high pressure valves 32 are disposed in a high pressure communication line 52 between the high pressure oil flow passage 28 and the respective working chambers 46, and configured to be capable of switching the communication state between the respective working chambers 46 and the high pressure oil flow passage 28. The low pressure valves 34 are disposed in a low pressure communication line 54 between the low pressure oil flow passage 30 and the respective working chambers 46, and configured to be capable of switching the communication state between the respective working chambers 46 and the low pressure oil flow passage 30.

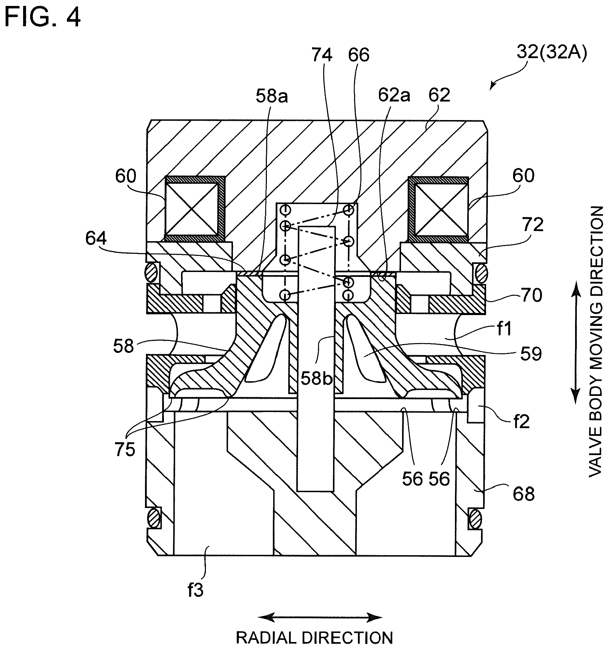

Next, the configuration of some poppet valves used as high pressure valves 32 will be described with reference to FIGs. 4 to 12. The poppet valves may be used as low pressure valves 34.

As shown in FIGs. 4 to 12, the poppet valve 32 (32A, 32B, 32C, 32D, 32E) according to some embodiments includes a poppet (valve body) 58 disposed so as to face the valve seat 56, and is configured to be movable by the actuator 60. The actuator 60 is housed inside the first valve casing 62. The first valve casing 62 includes a contact surface 62a capable of making contact with an end surface 58a of the poppet 58, disposed opposite to the valve seat 56, on an valve-opening operation of the poppet 58, via a thermally sprayed layer 64. The thermally sprayed layer 64 includes a non-magnetic material and is formed on at least a part of the end surface 48a of the poppet 58 or the contact surface 62a of the first valve casing 62. The Vickers hardness Hv1 of the end surface 58a of the poppet 58 or the contact surface 62a of the first valve casing 62 and the Vickers hardness Hv2 of the thermally sprayed layer 64 have the following relationship (1): (Hv1-50Hv)≤Hv2≤(Hv1+100Hv).

With the above configuration, to satisfy the hardness condition of the above expression (1), the hardness of the thermally sprayed layer 64 is substantially equivalent to the hardness of the poppet end surface 58a or the contact surface 62a. As a result, even if the thermally sprayed layer 64 repeatedly makes contact with or separates from the poppet end surface 58a or the contact surface 62a, it is possible to suppress aging (wear, fitting, settling, etc.) of the thermally sprayed layer 64, and thus it is possible to suppress the response delay of the poppet 58 due to aging of the thermally sprayed layer 64. That is, on occurrence of a valve-closing operation from a valve open state where the poppet end surface 58a is in contact with the contact surface 62a via the thermally sprayed layer 64, it is possible to suppress a decrease in the valve-closing response speed due to an increase of separation resistance due to aging of the thermally sprayed layer 64. Furthermore, it is possible to prevent an event in which, due to damage to the thermally sprayed layer 64, a fragment enters the clearance between the poppet 58 and the contact surface 62a and causes juddering.

Furthermore, the thermally sprayed layer 64 including a non-magnetic material is interposed between the poppet end surface 58a and the contact surface 62a, and thus it is possible to reduce an attractive force due to magnetism remaining on the poppet 58 or the first valve casing 62 on a closing operation of the poppet 58, which also improves the responsiveness of the poppet 58.

Furthermore, the thermally sprayed layer 64 may be formed on the poppet end surface 58a, or on the contact surface 62a of the first valve casing 62.

By reducing the area of the thermally sprayed layer 64 and forming the thermally sprayed layer 64 partially on the poppet end surface 58a or the contact surface 62a, it is possible to reduce the fitting effect and the separation resistance of the thermally sprayed layer 64 with the poppet end surface 48a or the contact surface 62a. Thus, by reducing the area of the thermally sprayed layer 64 without impairing the original function of the thermally sprayed layer 64, it is also possible to improve the response delay of the poppet 58.

In an embodiment, as shown in FIG. 4, the biasing member 66 is further provided, to bias the poppet 58 toward the valve seat 56. The poppet 58 and the first valve casing 62 include at least a portion made from a magnetic element. The actuator 60 includes a solenoid configured to generate an electromagnetic force that attracts the poppet 58 toward the first valve casing 62 against the biasing force applied by the biasing member 66 in an excited state.

In this embodiment, the poppet valve 32 is a normally-closed type solenoid valve, and the response speed of the valve-closing operation may decrease due to an attractive force generated by the residual magnetism of the first valve casing 62, even if power supply to the solenoid is stopped on a valve-closing operation.

Thus, by forming the thermally sprayed layer 64 between the poppet end surface 58a in the valve-open position and the contact surface 62a (magnetic-attractive surface), it is possible to reduce an attractive force due to residual magnetism, and to improve the responsiveness of the valve operation (e.g. valve-closing response speed).

In an embodiment, as shown in FIG. 4, the second valve casing 68 forming the valve seat 56 is provided, and an annular spacer 70 is disposed on the radially outer side of the poppet 58, between the first valve casing 62 and the second valve casing 68. The annular spacer 70 includes at least one communication flow passages f1 and f2 formed thereon, to bring the interior space housing the poppet 58 and the exterior space into communication. As the poppet 58 is disposed radially inside the annular spacer 70, it is possible to secure a suitable space to allow movement of the poppet 58. Further, with the communication flow passages f1 and f2 formed on the annular spacer 70, an inner flow passage is formed to bring the interior space and the exterior space of the annular spacer 70 into communication, and thus it is possible to form a smooth flow of a fluid between the communication flow passage f3 to be opened and closed by the poppet 58 and an external flow passage (e.g. the high pressure communication line 52 illustrated in FIG. 3) of the poppet valve 32.

In an embodiment, the poppet 58 includes at least one communication window 59 formed thereon, which is in communication with the communication flow passage f1, in the circumferential direction. The communication flow passage f3 is formed inside the second valve casing 68. The communication flow passages f1 and f2, and the communication flow passage f3 are brought into communication with one another by a valve-opening operation of the poppet 58, and the communication therebetween is shut off by a valve-closing operation of the poppet 58.

In an embodiment, as shown in FIG. 3, the communication flow passages f1 and f2 are in communication with the high pressure oil flow passage 28, and the communication flow passage f3 is in communication with the working chamber 46.

In an embodiment, as shown in FIG. 4, an annular member 72 is disposed between the first valve casing 62 and the annular spacer 70.

In an embodiment, the poppet 58 has a rod through hole 58b formed along the operation direction of the poppet 58. A rod 74 is loosely fit into the rod through hole 58b, and guides the poppet 58 to a valve-closed position or a valve-open position.

In an embodiment, the poppet end surface 58a and the contact surface 62a are formed to have an annular shape centered at the rod through hole 58b, and the thermally sprayed layer 64 is formed in an annular shape in at least a part of the poppet end surface 58a or the contact surface 62a.

In an embodiment, a seat surface 75 (to be in contact with the valve seat 56) protruding toward the valve seat is formed on a valve-seat side surface of the poppet 58. The seat surface 75 is formed to have a double concentric shape, and makes contact with the valve seat 56 formed on the first valve casing 62 on a valve-closing operation of the poppet 58. Accordingly, it is possible to prevent leakage of working oil when the valve is closed.

In an embodiment, under the hardness condition of the above expression (1), the base material of the non-magnetic material of the thermally sprayed layer 64 includes a material with a Vickers hardness of not less than 450.

According to this embodiment, with the thermally sprayed layer 64 having a high hardness, it is possible to suppress aging of the thermally sprayed layer 64, which makes it possible to suppress response delay of the poppet 58 due to aging of the thermally sprayed layer 64.

In an embodiment, under the hardness condition of the above expression (1), the Rockwell hardness HRC of the thermally sprayed layer 64 after forming a coating is not less than 45.

According to this embodiment, with the thermally sprayed layer 64 after forming a coating having a high hardness, it is possible to suppress aging of the thermally sprayed layer 64, which makes it possible to suppress response delay of the poppet 58 due to aging of the thermally sprayed layer 64.

In an embodiment, the layer thickness of the thermally sprayed layer 64 is not less than 1mm.

According to this embodiment, with the thermally sprayed layer 64 having a layer thickness of not less than 1mm, it is possible to maintain the strength of the thermally sprayed layer 64 and thereby suppress aging of the thermally sprayed layer 64, which makes it possible to suppress response delay of the poppet due to aging of the thermally sprayed layer 64.

Furthermore, preferably, the layer thickness of the thermally sprayed layer 64 may be not less than 4mm. Accordingly, it is possible to suppress aging of the thermally sprayed layer 64 even more effectively, which makes it possible to suppress response delay of the poppet due to aging of the thermally sprayed layer 64 effectively.

In an embodiment, the thermally sprayed layer 64 includes a cobalt-chromium alloy also containing tungsten, a nickel alloy, or a tungsten alloy.

A cobalt-chromium alloy also containing tungsten (e.g. Stellite®) has a Vickers hardness of 500 to 650Hv, and a nickel alloy and a tungsten alloy have a Vickers hardness of 600 to 700Hv, each alloy having a high hardness. Thus, with the thermally sprayed layer 64 including at least one of the above materials, it is possible to suppress aging of the thermally sprayed layer 64, which makes it possible to suppress response delay of the poppet 58 due to aging of the thermally sprayed layer 64.

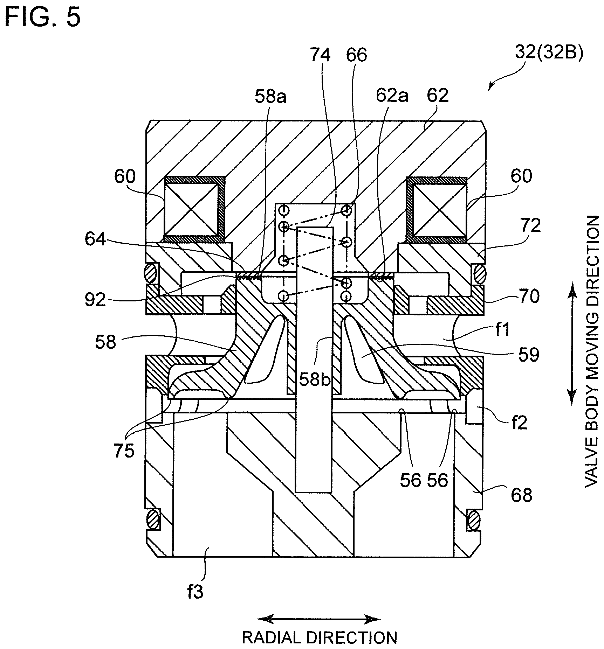

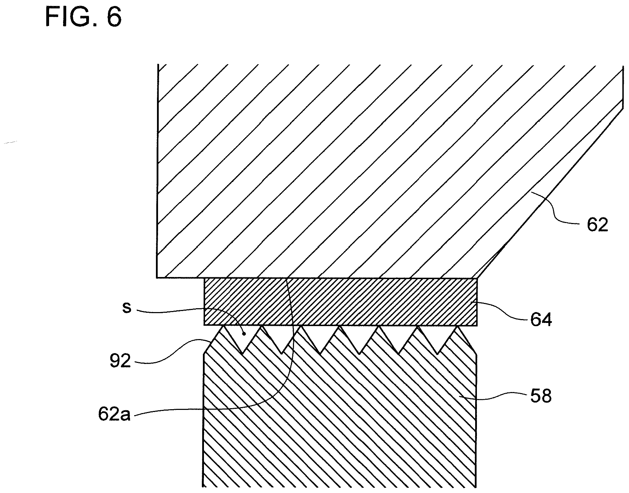

FIG. 5 is a vertical cross-sectional view of the poppet valve 32 (32B) according to an embodiment, and FIG. 6 is a partially enlarged view of FIG. 5.

As shown in FIG. 5, in the poppet valve 32 (32B), the contact surface 62a of the first valve casing 62 or the poppet end surface 58a capable of making contact with the thermally sprayed layer 64 includes an uneven portion 92. With the uneven portion 92, a space 's' is formed between the thermally sprayed layer 64 and the contact surface 62a or the poppet end surface 58a.

If the thermally sprayed layer 64 makes close surface-contact with the contact surface 62a or the poppet end surface 58a in a valve-opened state, when the thermally sprayed layer 64 separates from the contact surface 62a or the poppet end surface 58a on a valve closing operation, brief expansion occurs in the space 's' between the thermally sprayed layer 64 and the contact surface 62a or the poppet end surface 58a, which reduces the pressure and generates a pressure differential between the thermally sprayed layer 64 and the valve-seat side surface of the poppet 58. This pressure differential leads to deterioration of responsiveness in a valve-closing operation. Similarly, on a valve-opening operation, when the poppet end surface 58a approaches the contact surface 62a, brief compression may occur in the space between the above surfaces and increase the pressure therein, and the responsiveness of the valve-opening operation may decrease due to a pressure differential created between the poppet end surface 58a and the valve-seat side surface of the poppet 58.

According to this embodiment, with the uneven portion 92, it is possible to suppress deterioration of responsiveness in a valve operation due to a pressure differential caused between the poppet end surface 58a and the valve-seat side surface of the poppet 58 at the time of start of a valve-closing operation or a valve-opening operation. Specifically, when the poppet end surface 58a moves away from the contact surface 62a on a valve-closing operation, it is possible to suppress a rapid pressure decrease in the gap between the poppet end surface 58a and the contact surface 62a thanks to the presence of the space 's', which makes it possible to suppress deterioration of responsiveness in a valve-closing operation due to a pressure differential between the poppet end surface 58a and the valve-seat side surface. Similarly, on a valve-opening operation, when the poppet end surface 58a moves toward the contact surface 62a, it is possible to suppress a rapid pressure increase in the gap between the poppet end surface 58a and the contact surface 62a thanks to the presence of the space 's', which makes it possible to suppress deterioration of responsiveness of a valve-opening operation due to a pressure differential between the poppet end surface 58a and the valve-seat side surface.

Further, in a case where the poppet end surface 58a is in contact with the contact surface 62a, and the fluid around the poppet is capable of flowing into the space, it is possible to reduce a pressure differential between the poppet end surface 58a and the valve-seat side surface even further, and improve the responsiveness of the valve operation more effectively.

Further, since it is possible to reduce the contact area between the poppet end surface 58a or the contact surface 62a and the thermally sprayed layer 64 with the space 's', it is possible to achieve a structure such that it is difficult for the thermally sprayed layer 64 and the poppet end surface 58a or the contact surface 62a to be in close contact. Accordingly, it is possible to suppress deterioration of responsiveness in a valve-closing operation.

Furthermore, by reducing the area of the thermally sprayed layer 64 and forming the thermally sprayed layer 64 partially on the poppet end surface 58a or the contact surface 62a, it is possible to reduce a differential pressure that is generated between the poppet end surface 58a and the valve-seat side surface on a valve-opening operation. Thus, by reducing the area of the thermally sprayed layer 64 without impairing the original function of the thermally sprayed layer 64, it is also possible to improve the response delay of the poppet 58.

In the poppet valve 32 (32B) shown in FIG. 5, the thermally sprayed layer 64 is formed on the contact surface 62a, and an uneven portion 92 is formed on the poppet end surface 58a. Nevertheless, the same effect can be achieved by forming the thermally sprayed layer 64 on the poppet end surface 58a and the uneven portion 92 on the contact surface 62a.

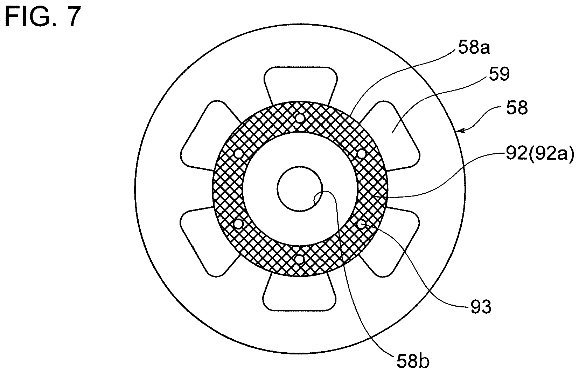

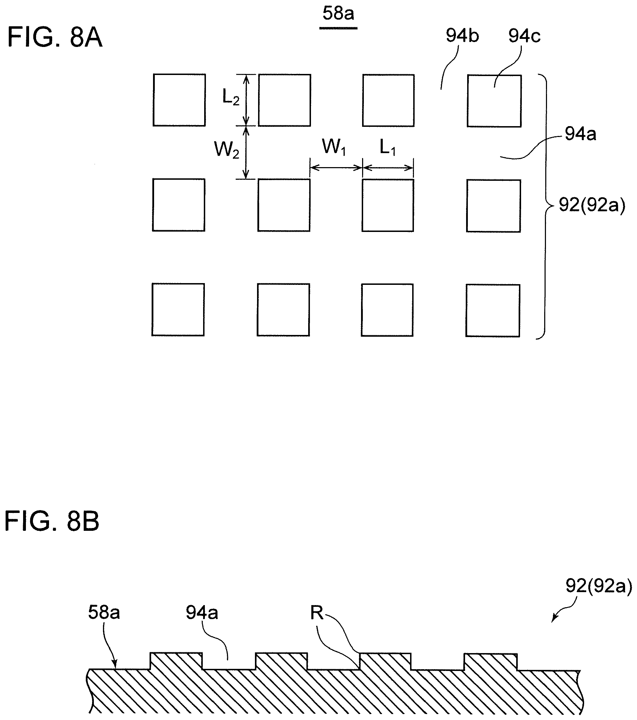

FIG. 7 is a planar view of the poppet 58 according to an embodiment. FIG. 8A is an enlarged view of the uneven portion 92 (92a) in FIG. 7. FIG. 8B is a cross-sectional view of the uneven portion 92 (92a).

In an embodiment, as shown in FIG. 7, FIG. 8A, and FIG. 8B, the uneven portion 92 (92a) is formed to have a mesh shape including a plurality of first grooves 94a and a plurality of second grooves 94b intersecting with the first grooves 94a.

With the above embodiment, it is possible to form myriad minute uneven sections easily or to form a uniform uneven section over a wide range. Thus, it is possible to securely reduce a pressure differential generated between the poppet end surface 58a and the valve-seat side surface on a valve operation and to improve the responsiveness of the valve operation effectively. Further, it is possible to achieve a structure such that the unevenness forming surface can hardly be damaged by collision between the thermally sprayed layer 64 and the poppet end surface 58a or the contact surface 62a.

Further, since it is possible to reduce the contact area between the thermally sprayed layer 64 and the poppet end surface 58a with the space 's', it is possible to achieve a structure such that it is difficult for the thermally sprayed layer 64 and the poppet end surface 58a to be in close contact. Accordingly, it is possible to suppress deterioration of responsiveness in a valve-closing operation.

Further, the uneven portion 92 (92a) is configured such that, while a recessed portion is formed to have an opening on the outer side of the poppet end surface 58a and the thermally sprayed layer 64 is in contact with the contact surface 62a, the fluid around the poppet is capable of flowing into the space 's', and thus it is possible to reduce a pressure differential between the poppet end surface 58a and the valve-seat side surface even further, and improve the responsiveness of the valve operation more effectively.

In an embodiment, the first grooves 94a and the second grooves 94b may be formed by electronic-beam welding or chemical etching. In this way, it is possible to form easily a groove having a depth that is effective in suppressing deterioration of responsiveness in a valve operation. The first grooves 94a and the second grooves 94b may be formed to have the same depth and width, or different depths or widths.

In an embodiment, the arithmetic average roughness Ra of a surface of a protruding portion 94c constituting the uneven portion 92 (92a) having a mesh shape is not greater than 0.05.

According to this embodiment, in a case where the protruding portion 94c constitutes the uneven portion 92 (92) having a mesh shape formed on the contact surface 62a or the poppet end surface 58a which repeatedly makes contact with or separates from the thermally sprayed layer 64, with the protruding portion 94c having a surface whose arithmetic average roughness Ra is not greater than 0.05, which means that the surface is smooth, it is possible to suppress aging such as wear and settling of the thermally sprayed layer 64. Accordingly, it is possible to suppress response delay of the poppet 58 due to the aging.

In an embodiment, as shown in FIG. 8A, the protruding portion 94c constituting the uneven portion 92 (92a) having a mesh shape has a rectangular outer shape in a view along the height direction of the protruding portion 94c. Further, the length L of a side of the rectangular and the width W of the first grooves 94a and the second grooves 94b satisfy a relationship 0.7W≤L≤1.3W.

According to this embodiment, the length L of a side of the rectangular and the width W of the first grooves and the second grooves satisfy a relationship 0.7W≤L≤1.3W, and thus it is possible to suppress slant contact with the thermally sprayed layer 64, which makes it possible to suppress aging such as wear and settling of the thermally sprayed layer. Accordingly it is possible to suppress response delay of the poppet 58 due to aging.

In an embodiment, the protruding portion 94c has a square outer shape. The width W₁ of the first grooves 94a and the width W₂ of the second grooves 94b are the same, or different. Also in this embodiment, when the length L of a side of the protruding portion 94c and the width W₁ of the first grooves 94a or the width W₂ of the second grooves 94b satisfy the above relationship, it is possible to suppress slant contact with the thermally sprayed layer 64, which makes it possible to suppress aging such as wear and settling of the thermally sprayed layer 64.

In an embodiment, as shown in FIG. 8A, the protruding portion 94c has a rectangular outer shape. The length L₁ of the first side and the length L2 of the second side are different. Also in this embodiment, when the length L₁ of the first side and the width W₁ of the first grooves 94a satisfy the above relationship and the length L2 of the second side and the width W₂ of the second grooves 94b satisfy the above relationship, it is possible to suppress slant contact with the thermally sprayed layer 64, which makes it possible to suppress aging such as wear and settling of the thermally sprayed layer 64.

In an embodiment, as shown in FIG. 8B, the corner portion of the surface and the root portion of the protruding portion 94c may have a rounded shape.

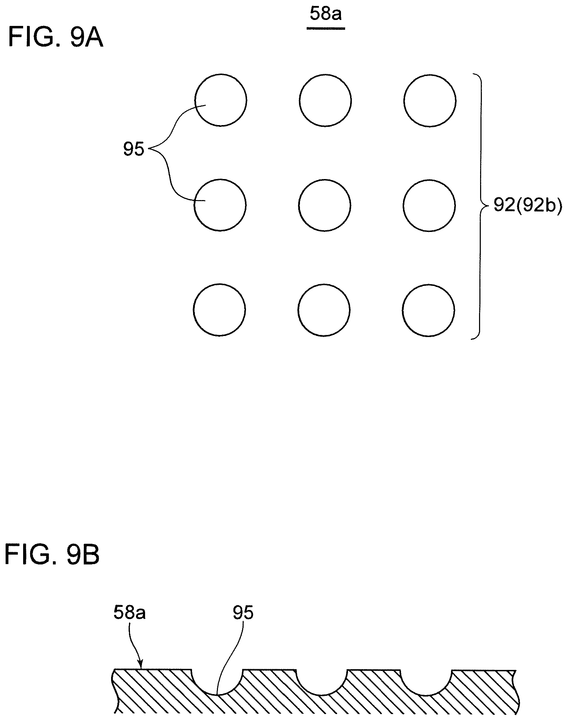

In an embodiment, as shown in FIGs. 9A and 9B, the uneven portion 92 (92b) has a dimple shape.

According to this embodiment, the uneven portion 92 (92b) having a dimple shape is formed on the contact surface 62a or the poppet end surface 58a which repeatedly makes contact with or separates from the thermally sprayed layer 64, which makes it possible to suppress aging such as wear and settling of the thermally sprayed layer. Furthermore, machine processing for the uneven portion is facilitated, and thus it is possible to form the uneven portion at low cost.

In an embodiment, the uneven portion 92 (92b) includes a plurality of recessed portions 95 formed discretely on the contact surface 62a or the poppet end surface 58a.

Furthermore, in an embodiment, the recessed portion 95 is a semi-spherical dimple, which can be machine-processed easily at low cost.

Furthermore, in an embodiment, a plurality of recessed portions 95 are aligned in at least one direction. In the embodiment shown in FIGs. 9A and 9B, a plurality of recessed portions 95 are aligned discretely in two directions perpendicular to each other. Accordingly, it is possible to suppress slant contact with the thermally sprayed layer 64 even further, and thus it is possible to suppress aging such as wear and settling of the thermally sprayed layer. Furthermore, it is possible to machine-process the uneven portion more easily and at lower cost.

In an embodiment, the poppet valve 32 is configured to be openable and closeable so as to switch the pressure inside the working chamber 46 of the hydraulic machine 40. The uneven portion 92 is formed by a drain groove formed on at least one of the poppet end surface 58a or the contact surface 62a for working oil of the hydraulic machine 40.

According to this embodiment, when the pressure on the surface of the thermally sprayed layer decreases in response to movement of the poppet 58 away from the contact surface 62a on a valve-closing operation, working oil of the hydraulic machine 40 is supplied to the drain groove formed by the uneven portion 92, and thus the pressure decrease of the surface of the thermally sprayed layer is suppressed. Accordingly, it is possible to suppress a pressure differential between the poppet end surface 58a and the valve-seat side surface, and thus it is possible to suppress response delay of the poppet 58.

In an embodiment, as shown in FIG. 7, an opening of an oil supply passage 93 is formed on the contact surface 62a or the poppet end surface 58a on which the drain groove is formed by the uneven portion 92, and the working oil is supplied to the drain groove from the oil supply passage 93. The oil supply passage 93 is in communication with an oil passage of working oil, that is, for instance, the communication flow passage f1.

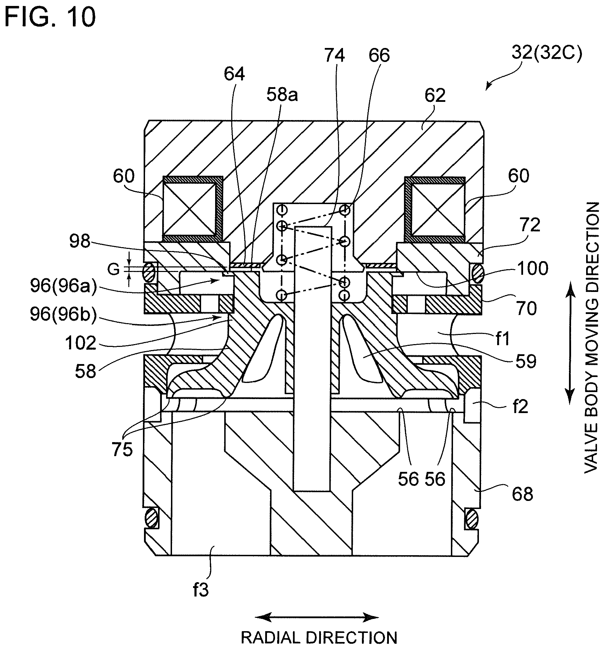

In an embodiment, as shown in FIGs. 10 to 12, gap forming portions (96a, 96b, 96c, 96d) are provided, for forming a gap G between the thermally sprayed layer 64 and the contact surface 62a or the poppet end surface 58a when the poppet end surface 58a is closest to the first valve casing 62.

According to this embodiment, the position of the poppet end surface 58a is restricted by the gap forming portions 96 when the poppet end surface 58a and the contact surface 62a are in the closest position, and thereby the gap G is formed between the thermally sprayed layer 64 and the contact surface 62a or the poppet end surface 58a. Thus, compared to a case in which the thermally sprayed layer 64 makes direct contact with the contact surface 62a or the poppet end surface 58a, it is possible to suppress aging of the thermally sprayed layer 64. Accordingly, it is possible to suppress response delay of the poppet due to aging of the thermally sprayed layer 64.

Furthermore, even if aging of the thermally sprayed layer 64 occurs, the gap G between the thermally sprayed layer 64 and the poppet end surface 58a or the contact surface 62a prevents the thermally sprayed layer 64 from making direct contact when the poppet 58 opens, and thus aging of the thermally sprayed layer 64 does not advance further.

In the embodiment shown in FIGs. 10 to 12, the thermally sprayed layer 64 is formed on the contact surface 62a. Nevertheless, the thermally sprayed layer 64 may be formed on the poppet end surface 58a.

In an embodiment, as shown in FIG. 10, the gap forming portion 96 (96a) includes a first diameter increasing portion 98 and a stopper portion 100. The first diameter increasing portion 98 is formed on the poppet end surface 58a, and the diameter of the first diameter increasing portion 98 increases outward in the radial direction of the poppet end surface 58a. The stopper portion 100 is disposed on the outer side of the contact surface 62a with respect to the radial direction of the poppet 58, and is configured to be capable of interlocking with the first diameter increasing portion 98.

According to this embodiment, when the poppet end surface 58a is closest to the contact surface 62a and the gap G is formed between the thermally sprayed layer 64 and the poppet end surface 58a or the contact surface 62a, the stopper portion 100 interlocks with the first diameter increasing portion 98, and thus it is possible to avoid direct contact between the thermally sprayed layer 64 and the contact surface 62a or the poppet end surface 58a. The first diameter increasing portion 98 is formed by the poppet end surface 58a, and thus it is possible to a set a position relative to the poppet end surface 58a with respect to the valve moving direction, which makes it possible to easily set the position of the first diameter increasing portion 98.

In an embodiment, the first diameter increasing portion 98 and the stopper portion 100 are formed into an annular shape centered at the rod through hole 58b.

In an embodiment, the stopper portion 100 is formed by an inner portion of the annular member 72. According to this embodiment, it is possible to use the existing annular member 72 without providing an additional member, and thus to reduce the cost.

In an embodiment, as shown in FIG. 10, the gap forming portion 96 (96b) includes a step portion 102 formed on the outer peripheral surface of the poppet 58. The step portion 102 is disposed at a position where the step portion 102 is capable of interlocking with the annular spacer 70 when the poppet end surface 58a is closest to the contact surface 62a.

According to this embodiment, when the poppet end surface 58a is closest to the contact surface 62a, the step portion 102 interlocks with the annular spacer 70, and thus it is possible to simply avoid direct contact between the thermally sprayed layer 64 and the contact surface 62a or the poppet end surface 58a.

In an embodiment, the step portion 102 is formed on the outer peripheral surface of the poppet 58, so as to have an annular shape centered at the rod through hole 58b.

While the embodiment shown in FIG. 10 has the gap forming portion 96 (96a) and the gap forming portion 96 (96b), only one of the gap forming portions may be provided.

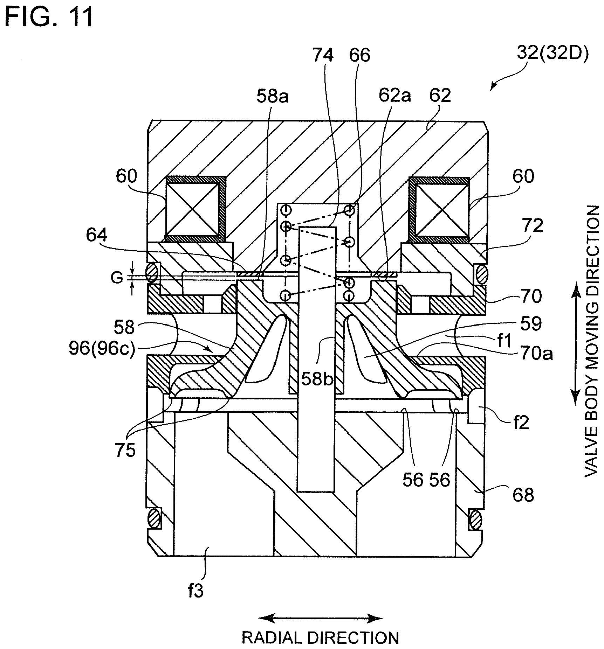

In an embodiment, as shown in FIG. 11, the poppet 58 has a cone shape with a diameter gradually increasing toward the valve seat 56. The gap forming portion 96 (96c) is configured such that the outer peripheral surface of the poppet 58 makes contact with the annular spacer 70, when the poppet end surface 58a is closest to the contact surface 62a on the valve-opening operation of the poppet 58, that is, when the gap G is formed between the thermally sprayed layer 64 and the contact surface 62a or the poppet end surface 58a.

According to this embodiment, when the gap G is formed between the thermally sprayed layer 64 and the contact surface 62a or the poppet end surface 58a, the outer peripheral surface of the poppet 58 makes contact with the annular spacer 70 and stops the valve-opening operation. As described above, it is possible to simply prevent direct contact between the thermally sprayed layer 64 and the contact surface 62a or the poppet end surface 58a.

In an embodiment, as shown in FIG. 11, the annular spacer 70 includes a diameter decreasing portion 70a configured to make contact with a cone-shape outer peripheral surface of the poppet 58 to interlock with the poppet 58, when the poppet end surface 58a is closest to the contact surface 62a on a valve-moving operation of the poppet 58. In an embodiment, the diameter decreasing portion 70a is formed on the outer side of the outer peripheral surface of the poppet 58, so as to have an annular shape.

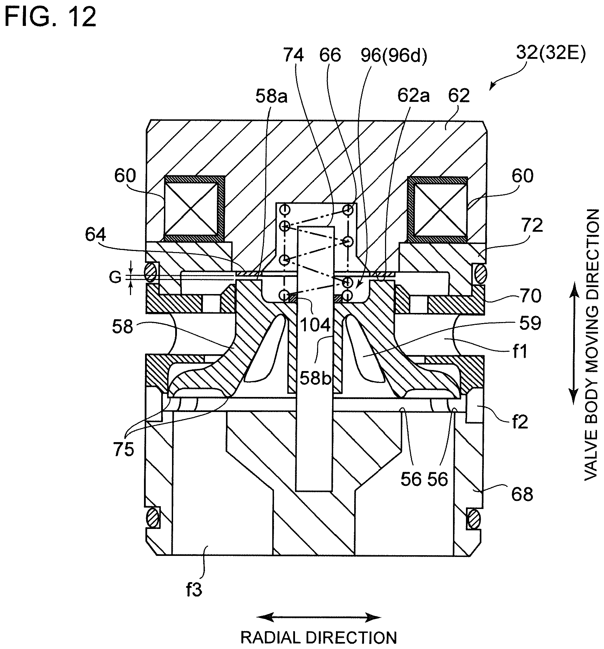

In an embodiment, as shown in FIG. 12, the gap forming portion 96 (96d) includes a second diameter increasing portion 104 formed on the rod 74. In this embodiment, when the poppet end surface 58a is closest to the contact surface 62a on a valve-opening operation of the poppet 58, that is, when the gap G is formed between the thermally sprayed layer 64 and the contact surface 62a or the poppet end surface 58a, the poppet 58 interlocks with the second diameter increasing portion 104.

According to this embodiment, it is possible to simply prevent direct contact between the thermally sprayed layer 64 and the contact surface 62a or the poppet end surface 58a.

In an embodiment, the second diameter increasing portion 104 includes a circular fringe portion disposed so as to protrude in the radial direction from the outer peripheral surface of the rod 74.

As shown in FIG. 2, the hydraulic machine 40 includes a cylinder 42 and a piston 44 which reciprocates inside the cylinder, the cylinder 42 and the piston 44 forming a working chamber 46. Further, the hydraulic machine 40 includes a poppet valve 32 capable of controlling a communication state between the working chamber 46 and the high pressure oil flow passage 28 and the low pressure oil flow passage 30.

The above hydraulic machine 40 includes the poppet valve 32 having an improved responsiveness, and thus it is possible to improve the reliability.

As shown in FIG. 1, the hydraulic transmission 14 generates high pressure oil with the hydraulic pump 24. When the generated high pressure oil drives the hydraulic motor 26, at least one of the hydraulic pump 24 or the hydraulic motor 26 includes the hydraulic machine 40 including the poppet valve 32 having a high responsiveness, and thus it is possible to achieve a high reliability even when the wind turbine power generating apparatus 10 is under a harsh operational condition.

In the wind turbine power generating apparatus 10, at least one of the hydraulic pump 24 or the hydraulic motor 26 constituting the hydraulic transmission 14 includes the hydraulic machine 40 including the poppet valve 32 having a high reliability, and thus the wind turbine power generating apparatus 10 can be operated stably as a renewable energy type power generating apparatus.

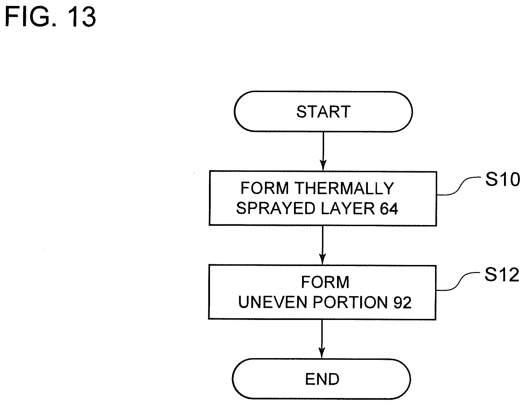

As shown in FIG. 13, a method of producing the poppet valve 32 according to an embodiment includes forming the thermally sprayed layer 64 including a non-magnetic material on at least a part of the poppet end surface 58a or the contact surface 62a of the first valve casing 62 (thermal spraying step S10). The Vickers hardness Hv1 of the poppet end surface 58a and the Vickers hardness Hv2 of the thermally sprayed layer 64 have a relationship (Hv1-50Hv)≤Hv2≤(Hv1+100Hv).

According to the above producing method, the thermally sprayed layer 64 formed in the thermal spraying step S10 has a hardness substantially equivalent to that of the poppet end surface 58a and the contact surface 62a of the first valve casing 62, and thus it is possible to suppress aging of the thermally sprayed layer 64. Thus, it is possible to suppress response delay of the poppet due to aging of the thermally sprayed layer 64. Furthermore, it is possible to prevent an event in which, due to damage to the thermally sprayed layer, a fragment enters the clearance between the poppet and the valve casing and causes juddering.

Furthermore, the thermally sprayed layer 64 including a non-magnetic material is interposed between the poppet end surface 58a and the contact surface 62a, it is possible to reduce an attractive force due to magnetism remaining on the poppet 58 or the contact surface 62a on a closing operation of the poppet 58, which also improves the responsiveness of the poppet 58.

In an embodiment, as shown in FIG. 13, an uneven portion forming step S12 is further performed. That is, as shown in FIGs. 5 and 6, the uneven portion 92 is formed on the contact surface 62a or the poppet end surface 58a capable of making contact with the thermally sprayed layer 64, and the uneven portion 92 forms a space 's' between the thermally sprayed layer 64 and the contact surface 62a or the poppet end surface 58a.

According to this embodiment, with the space 's' being formed by the uneven portion 92 formed on the contact surface 62a or the poppet end surface 58a which repeatedly makes contact with or separates from the thermally sprayed layer 64, it is possible to suppress a differential pressure generated between the poppet end surface 58a and the valve-seat side surface on the valve-closing operation and the valve-opening operation of the poppet 58, and suppress deterioration of responsiveness in a valve operation due to the pressure differential.

In an embodiment, in the thermal spraying step S10, the thermally sprayed layer is formed on at least a part of the end surface of the poppet valve of the poppet 58 or the contact surface of the first valve casing by using a high velocity oxygen fuel (HVOF) spraying method.

According to this embodiment, by forming the thermally sprayed layer 64 by using the HVOF method, it is possible to form a high density coating with a low porosity. Furthermore, it is possible to obtain a thermally sprayed layer that has a uniform hardness and undergoes less aging.

In an embodiment, in the uneven portion forming step S12, the uneven portion 92 is formed by photo etching.

According to this embodiment, by forming the uneven portion 92 by photo etching, it is possible to form a micron-size complex uneven portion precisely as designed. Furthermore, it is possible to perform precise machine processing without forming burrs and strains, or causing hardening, etc.

### Industrial Applicability

According to some embodiments, it is possible to suppress response delay of the poppet due to aging and damage of the position-restricting part. Accordingly, it is possible to realize a highly reliable poppet valve. By providing this poppet valve for a hydraulic machine or a hydraulic transmission of a renewable energy type power generating apparatus, for instance, it is possible to enhance the reliability of the renewable-energy type power generating apparatus.

## Claims

1. A poppet valve (32), comprising:
a valve seat (56);
a poppet (58) disposed so as to face the valve seat (56) ;
an actuator (60) for driving the poppet (58);
a first valve casing (62) which houses the actuator (60) and which includes a contact surface (62a) capable of making contact with an end surface (58a) of the poppet (58) opposite to the valve seat (56), on a valve-opening operation of the poppet (58); and
a thermally sprayed layer (64) including a non-magnetic material, formed on at least a part of the end surface (58a) of the poppet (58) or the contact surface (62a) of the first valve casing (62),
**characterized in that**
a Vickers hardness Hv1 of the end surface (58a) of the poppet (58) or the contact surface (62a) of the first valve casing (62) and a Vickers hardness Hv2 of the thermally sprayed layer (64) satisfy a relationship (Hv1-50Hv)≤Hv2≤(Hv1+100Hv), and
a base material of the non-magnetic material of the thermally sprayed layer (64) has a Vickers hardness of not less than 450.

2. The poppet valve (32) according to claim 1,
wherein a Rockwell hardness of the thermally sprayed layer (64) after formation of a coating is not less than 45.

3. The poppet valve (32) according to claim 1 or 2,
wherein the thermally sprayed layer (64) comprises a cobalt-chromium alloy also containing tungsten, a nickel alloy, or a tungsten alloy.

4. The poppet valve (32) according to any one of claims 1 to 3,
further including a biasing member (66) for biasing the poppet (58) toward the valve seat (56),
wherein the poppet (58) and the first valve casing (62) are both at least partially formed by a magnetic element, and
wherein the actuator (60) includes a solenoid configured to, in an excited state, generate an electromagnetic force which attracts the poppet (58) toward the first valve casing (62), against a biasing force of the biasing member (66).

5. The poppet valve (32) according to any one of claims 1 to 4,
wherein the contact surface (62a) of the first valve casing (62) or the end surface (58a) of the poppet (58) capable of making contact with the thermally sprayed layer (64) includes an uneven portion (92;92b) configured to form a space (s) between the thermally sprayed layer (64) and the contact surface (62a) of the first valve casing (62) or the end surface (58a) of the poppet (58), and
wherein the uneven portion (92;92b) is formed to have a dimple shape.

6. The poppet valve (32) according to any one of claims 1 to 4,
wherein the contact surface (62a) of the first valve casing (62) or the end surface (58a) of the poppet (58) capable of making contact with the thermally sprayed layer (64) includes an uneven portion (92;92a) configured to form a space (s) between the thermally sprayed layer (64) and the contact surface (62a) of the first valve casing (62) or the end surface (58a) of the poppet (58), and
wherein the uneven portion (92;92a) is formed by a plurality of first grooves (94a) and a plurality of second grooves (94b) intersecting with the first grooves (94a), so as to have a mesh shape.

7. The poppet valve (32) according to claim 6,
wherein an arithmetic average roughness Ra of a surface of a protruding portion (92c) constituting the uneven portion (92;92a) is not greater than 0.05µm.

8. The poppet valve (32) according to claim 6 or 7,
wherein a/the protruding portion (92c) constituting the uneven portion (92;92a) has a rectangular outer shape in a view along a height direction of the protruding portion (92c), and
wherein a length L of a side of the rectangular and a width W of the first grooves (94a) and the second grooves (94b) satisfy a relationship 0.7W≤L≤1.3W.

9. A renewable-energy type power generating apparatus (10), comprising:
a rotor (12) configured to receive renewable energy and rotate;
a generator (16);
a hydraulic pump (24) configured to be driven by the rotor (12) to generate high-pressure oil; and
a hydraulic motor (26) configured to drive the generator (16) with the high-pressure oil supplied from the hydraulic pump (24),
wherein at least one of the hydraulic pump (24) or the hydraulic motor (26) comprises a hydraulic machine (40) including:
a cylinder (42);
a piston (44) configured to reciprocate inside the cylinder (42); and
the poppet valve (32) according to any one of claims 1 to 8, configured to control a communication state between an external flow passage (28,30) and a working chamber (46) formed by the cylinder (42) and the piston (44).

10. A method of producing a poppet valve (32) which comprises:
a valve seat (56);
a poppet (58) disposed so as to face the valve seat (56) ;
an actuator (60) for driving the poppet (58); and
a first valve casing (62) which houses the actuator (60) and which includes a contact surface (62a) capable of making contact with an end surface (58a) of the poppet (58) opposite to the valve seat (56),
the method comprising:
a thermal spraying step (S10) of forming a thermally sprayed layer (64) including a non-magnetic material on at least a part of the end surface (58a) of the poppet (58) or the contact surface (62a) of the first valve casing (62),
wherein a Vickers hardness Hv1 of the end surface (58a) of the poppet (58) or the contact surface (62a) of the first valve casing (62) and a Vickers hardness Hv2 of the thermally sprayed layer (64) satisfy a relationship (Hv1-50Hv)≤Hv2≤(Hv1+100Hv), and
wherein a base material of the non-magnetic material of the thermally sprayed layer (64) has a Vickers hardness of not less than 450.

11. The method of producing a poppet valve (32) according to claim 10,
further comprising a step (S12) of forming an uneven portion (92;92a) on the contact surface (62a) of the first valve casing (62) or the end surface (58a) of the poppet (58) capable of making contact with the thermally sprayed layer (64), and forming a space (s) between the thermally sprayed layer (64) and the contact surface (62a) of the first valve casing (62) or the end surface (58a) of the poppet (58) with the uneven portion (92;92a).

12. The method of producing a poppet valve (32) according to claim 10 or 11,
wherein the thermal spraying step (S10) includes forming the thermal sprayed layer (64) on at least a part of the end surface (58a) of the poppet (58) or the contact surface (62a) of the first valve casing (62) by high velocity oxygen fuel combustion spraying.

## Patentansprüche

1. Ein Tellerventil (32) mit:
einem Ventilsitz (56),
einem Teller (58), der so angeordnet ist, dass er dem Ventilsitz (65) zugewandt ist,
einem Betätiger (60) zum Antreiben des Tellers (58),
einem ersten Ventilgehäuse (62), das den Betätiger (60) aufnimmt und das eine Kontaktoberfläche (62a) aufweist, die bei einer Ventil-Öffnungsbetätigung des Tellers (58) einen Kontakt mit einer Endoberfläche (58a) des Tellers (58) gegenüber dem Ventilsitz (56) machen kann, und
einer thermisch gespritzten Schicht (64) mit einem nichtmagnetischen Material, die auf zumindest einem Teil der Endoberfläche (58a) des Tellers (58) oder der Kontaktoberfläche (62a) des ersten Ventilgehäuses (62) ausgebildet ist,
**dadurch gekennzeichnet, dass**
eine Vickershärte Hv1 der Endoberfläche (58a) des Tellers (58) oder der Kontaktoberfläche (62a) des ersten Ventilgehäuses (62) und eine Vickershärte Hv2 der thermisch gespritzten Schicht (64) eine Beziehung (Hv1-50Hv)≤Hv2≤(Hv1+100Hv) erfüllen, und
ein Basismaterial des nichtmagnetischen Materials der thermisch gespritzten Schicht (64) eine Vickershärte von nicht weniger als 450 besitzt.

2. Das Tellerventil (32) gemäß Anspruch 1,
wobei eine Rockwellhärte der thermisch gespritzten Schicht (64) nach der Ausbildung einer Beschichtung nicht weniger als 45 beträgt.

3. Das Tellerventil (32) gemäß Anspruch 1 oder 2,
wobei die thermisch gespritzte Schicht (64) eine Kobalt-Chrom-Legierung aufweist, die außerdem Wolfram, eine NickelLegierung oder eine Wolfram-Legierung enthält.

4. Das Tellerventil (32) gemäß einem der Ansprüche 1 bis 3,
ferner mit einem Vorbelastungselement (66) zum Vorbelasten des Tellers (58) zu dem Ventilsitz (56) hin,
wobei der Teller (58) und das erste Ventilgehäuse (62) beide zumindest teilweise aus einem magnetischen Element gebildet sind, und
wobei der Betätiger (60) ein Solenoid aufweist, das konfiguriert ist, um im erregten Zustand eine elektromagnetische Kraft zu erzeugen, die den Teller (58) gegen eine Vorbelastungskraft des Vorbelastungselements (66) zu dem ersten Ventilgehäuse (62) hin anzieht.

5. Das Tellerventil (32) gemäß einem der Ansprüche 1 bis 4,
wobei die Kontaktoberfläche (62a) des ersten Ventilgehäuses (62) oder die Endoberfläche (58a) des Tellers (58), die in Kontakt mit der thermisch gespritzten Schicht (64) gelangen kann, einen ungleichmäßigen Abschnitt (92;92b) aufweist, der konfiguriert ist, um einen Raum (s) zwischen der thermisch gespritzten Schicht (64) und der Kontaktoberfläche (62a) des ersten Ventilgehäuses (62) oder der Endoberfläche (58a) des Tellers (58) zu bilden, und
wobei der ungleichmäßige Abschnitt (92;92b) mit einer Grübchenform ausgebildet ist.

6. Das Tellerventil (32) gemäß einem der Ansprüche 1 bis 4,
wobei die Kontaktoberfläche (62a) des ersten Ventilgehäuses (62) oder die Endoberfläche (58a) des Tellers (58), die in Kontakt mit der thermisch gespritzten Schicht (64) gelangen kann, einen ungleichmäßigen Abschnitt (92;92a) aufweist, der konfiguriert ist, um einen Raum (s) zwischen der thermisch gespritzten Schicht (64) und der Kontaktoberfläche (62a) des ersten Ventilgehäuses (62) oder der Endoberfläche (58a) des Tellers (58) zu bilden, und
wobei der ungleichmäßige Abschnitt (92;92a) durch eine Vielzahl von ersten Nuten (94a) und eine Vielzahl von zweiten Nuten (94b) gebildet ist, die die ersten Nuten (94a) so schneiden, dass sie eine Netzform haben.

7. Das Tellerventil (32) gemäß Anspruch 6,
wobei eine arithmetische Durchschnittsrauhheit Ra einer Oberfläche eines vorstehenden Abschnitts (92c), der den ungleichmäßigen Abschnitt (92;92a) bildet, nicht größer als 0,05µm ist.

8. Das Tellerventil (32) gemäß Anspruch 6 oder 7,
wobei einer/der vorstehende Abschnitt (92c), der den ungleichmäßigen Abschnitt (92;92a) bildet, eine rechteckige Außenform in einer Ansicht entlang einer Höhenrichtung des vorstehenden Abschnitts (92c) hat, und
wobei eine Länge L einer Seite des Rechtecks und eine Weite W der ersten Nuten (94a) und der zweiten Nuten (94b) eine Beziehung 0,7W≤L≤1,3W erfüllen.

9. Eine erneuerbare Energie-Stromerzeugungsvorrichtung (10) mit:
einem Rotor (12), der konfiguriert ist, um erneuerbare Energie zu empfangen und zu rotieren,
einem Generator (16),
einer Hydraulikpumpe (24), die konfiguriert ist, um durch den Rotor (12) angetrieben zu werden, um ein Hochdrucköl zu erzeugen, und
einem Hydraulikmotor (26), der konfiguriert ist, um den Generator (16) mit dem Hochdrucköl, das von der Hydraulikpumpe (24) zugeführt wird, anzutreiben,
wobei zumindest eine von der Hydraulikpumpe (24) oder dem Hydraulikmotor (26) eine Hydraulikmaschine (40) aufweist, mit:
einem Zylinder (42),
einem Kolben (44), der konfiguriert ist, um sich im Inneren des Zylinders (42) hin-und-herzubewegen, und
dem Tellerventil (32) gemäß einem der Ansprüche 1 bis 8, das konfiguriert ist, um einen Verbindungszustand zwischen einem externen Strömungsdurchgang (28,30) und einer Arbeitskammer (46), die durch den Zylinder (42) und den Kolben (44) gebildet ist, zu steuern.

10. Ein Verfahren zum Herstellen eines Tellerventils (32), das aufweist:
einen Ventilsitz (56),
einen Teller (58), der so angeordnet ist, dass er dem Ventilsitz (65) zugewandt ist,
einen Betätiger (60) zum Antreiben des Tellers (58), und
ein erstes Ventilgehäuse (62), das den Betätiger (60) aufnimmt und das eine Kontaktoberfläche (62a) aufweist, die bei einer Ventil-Öffnungsbetätigung des Tellers (58) einen Kontakt mit einer Endoberfläche (58a) des Tellers (58) gegenüber dem Ventilsitz (56) machen kann,
wobei das Verfahren aufweist:
einen thermischen Spritzschritt (S10) des Ausbildens einer thermisch gespritzten Schicht (64) mit einem nichtmagnetischen Material auf zumindest einem Teil der Endoberfläche (58a) des Tellers (58) oder der Kontaktoberfläche (62a) des ersten Ventilgehäuses (62),
wobei eine Vickershärte Hv1 der Endoberfläche (58a) des Tellers (58) oder der Kontaktoberfläche (62a) des ersten Ventilgehäuses (62) und eine Vickershärte Hv2 der thermisch gespritzten Schicht (64) eine Beziehung (Hv1-50Hv)≤Hv2≤(Hv1+100Hv) erfüllen, und
wobei ein Basismaterial des nichtmagnetischen Materials der thermisch gespritzten Schicht (64) eine Vickershärte von nicht weniger als 450 besitzt.

11. Das Verfahren zum Herstellen eines Tellerventils (32) gemäß Anspruch 10,
ferner mit einem Schritt (S12) des Ausbildens eines ungleichmäßigen Abschnitts (92;92a) auf der Kontaktoberfläche (62a) des ersten Ventilgehäuses (62) oder der Endoberfläche (58a) des Tellers (58), die in Kontakt mit der thermisch gespritzten Schicht (64) gelangen kann, und Ausbilden eines Raums (s) zwischen der thermisch gespritzten Schicht (64) und der Kontaktoberfläche (62a) des ersten Ventilgehäuses (62) oder der Endoberfläche (58a) des Tellers (58) mit dem ungleichmäßigen Abschnitt (92;92a).

12. Das Verfahren zum Herstellen eines Tellerventils (32) gemäß Anspruch 10 oder 11,
wobei der thermische Spritzschritt (S10) ein Ausbilden der thermisch gespritzten Schicht (64) auf zumindest einem Teil der Endoberfläche (58a) des Tellers (58) oder der Kontaktoberfläche (62a) des ersten Ventilgehäuses (62) durch Hochgeschwindigkeits-Sauerstoff-Brennstoffverbrennungsspritzen umfasst.

## Revendications

1. Soupape (32) à champignon, comprenant :
un siège (56) de soupape ;
un champignon (58) disposé de manière à être en face du siège (56) de soupape ;
un actionneur (60) pour entraîner le champignon (58) ;
un premier corps (62) de soupape, dans lequel l'actionneur (60) est logé et qui comprend une surface (62a) de contact capable de faire contact avec une surface (58a) d'extrémité du champignon (58) opposé au siège (56) de soupape, lors d'un fonctionnement d'ouverture de soupape du champignon (58) ; et
une couche (64) pulvérisée à chaud comprenant un matériau amagnétique, formé sur au moins une partie de la surface (58a) d'extrémité du champignon (58) ou sur la surface (62a) de contact du premier corps (62) de soupape,
**caractérisée en ce que**
une dureté HV1 Vickers de la surface (58a) d'extrémité du champignon (58) ou de la surface (62a) de contact du premier corps (62a) de soupape et une dureté Hv2 Vickers de la couche (64) pulvérisée à chaud satisfont une relation (Hv1-50Hv)≤Hv2≤(Hv1+100Hv), et
un matériau de base du matériau amagnétique de la couche (64) pulvérisée à chaud à une dureté Vickers de pas moins de 450.

2. Soupape (32) à champignon suivant la revendication 1,
dans laquelle une dureté Rockwell de la couche (64) pulvérisée à chaud, après formation d'un revêtement, n'est pas plus petite que 45.

3. Soupape (32) à champignon suivant la revendication 1 ou 2,
dans laquelle la couche (64) pulvérisée à chaud comprend un alliage de cobalt et de chrome contenant aussi du tungstène, un alliage de nickel ou un alliage de tungstène.

4. Soupape (32) à champignon suivant l'une quelconque des revendications 1 à 3,
comprenant, en outre, un élément (66) de sollicitation pour faire aller le champignon (58) vers le siège (56) de soupape,
dans laquelle le champignon (58) et le premier corps (62) de soupape sont formés tous deux, au moins en partie, d'un élément magnétique, et
dans laquelle l'actionneur (60) comprend un électroaimant configuré pour, à l'état excité, produire une force électromagnétique, qui attire le champignon (58) vers le premier corps (62) de soupape à l'encontre d'une force de sollicitation de l'élément (66) de sollicitation.

5. Soupape (32) à champignon suivant l'une quelconque des revendications 1 à 4,
dans laquelle la surface (62a) de contact du premier corps (62) de soupape ou la surface (58a) d'extrémité du champignon (58) capable de faire contact avec la couche (64) pulvérisée à chaud comprend une partie (92, 92b) inégale configurée pour former un espace (s) entre la couche (64) pulvérisée à chaud et la surface (62a) de contact du premier corps (62) de soupape ou la surface (58a) d'extrémité du champignon (58), et
dans laquelle la partie (92; 92b) inégale est formée de manière à avoir une forme en bossage.

6. Soupape (32) à champignon suivant l'une quelconque des revendications 1 à 4,
dans laquelle la surface (62a) de contact du premier corps (62) de soupape ou la surface (58a) d'extrémité du champignon (58) capable de faire contact avec la couche (64) pulvérisée à chaud comprend une partie (92; 92a) inégale configurée pour former un espace (s) entre la couche (64) pulvérisée à chaud et la surface (62a) de contact du premier corps (62) de soupape ou la surface (58a) d'extrémité du champignon (58), et
dans laquelle la partie (92; 92a) inégale est formée d'une pluralité de premières rainures (94a) et d'une pluralité de secondes rainures (94b) entrecroisées avec les première rainures (94a) de manière à avoir une forme en maille.

7. Soupape (32) à champignon suivant la revendication 6,
dans laquelle une dureté Rₐ arithmétique moyenne d'une surface d'une partie (92c) en saillie constituant la partie (92; 92a) inégale n'est pas supérieure à 0,05 µm.

8. Soupape (32) à champignon suivant la revendication 6 ou 7,
dans laquelle une/la partie (92c) en saillie constituant la partie (92; 92a) inégale a une forme extérieure rectangulaire dans une vue suivant une direction en hauteur de la partie (92c) en saillie, et
dans laquelle une longueur L d'un côté du rectangle et une largeur W des premières rainures (94a) et des secondes rainures (94b) satisfont une relation 0,7W≤L≤1,3W.

9. Installation (10) de production d'électricité du type à énergie renouvelable, comprenant :
une roue (12) configurée pour recevoir de l'énergie renouvelable et pour tourner ;
un générateur (16) ;
une pompe (24) hydraulique configurée pour être entraînée par la roue (12) afin de produire de l'huile sous haute pression ; et
un moteur (26) hydraulique configuré pour entraîner le générateur (16) par l'huile sous haute-pression fournie par la pompe (24) hydraulique ;
dans laquelle au moins l'un de la pompe (24) hydraulique ou du moteur (26) hydraulique comprend une machine (40) hydraulique comprenant :
un cylindre (42) ;
un piston (44) configuré pour aller et venir à l'intérieur du cylindre (42) ; et
la soupape (32) à champignon suivant l'une quelconque des revendications 1 à 8, configurée pour commander un état de communication entre un passage (28, 30) de courant extérieur et une chambre (46) de travail formée par le cylindre (42) et le piston (44).

10. Procédé de fabrication d'une soupape (32) à champignon, qui comprend :
un siège (56) de soupape ;
un champignon (58) disposé de manière à être en face du siège (56) de soupape ;
un actionneur (60) pour entraîner le champignon (58) ;
un premier corps (62) de soupape, dans lequel l'actionneur (60) est logé et qui comprend une surface (62a) de contact capable de faire contact avec une surface (58a) d'extrémité du champignon (58) opposé au siège (56) de soupape,
le procédé comprenant :
un stade (S10) de pulvérisation à chaud, dans lequel on forme une couche (64) pulvérisée à chaud, comprenant un matériau amagnétique sur au moins une partie de la surface (58a) d'extrémité du champignon (58) ou sur la surface (62a) de contact du premier corps (62) de soupape,
dans lequel une dureté HV1 Vickers de la surface (58a) d'extrémité du champignon (58) ou de la surface (62a) de contact du premier corps (62a) de soupape et une dureté Hv2 Vickers de la couche (64) pulvérisée à chaud satisfont une relation (Hv1-50Hv)≤Hv2≤(Hv1+100Hv), et
dans lequel un matériau de base du matériau amagnétique de la couche (64) pulvérisée à chaud à une dureté Vickers de pas moins de 450.

11. Procédé de fabrication d'une soupape (32) à champignon suivant la revendication 10,
comprenant, en outre, un stade (S12), dans lequel on forme une partie (92; 92a) inégale sur la surface (62a) du premier corps (62) de soupape ou sur la surface (58a) d'extrémité du champignon (58) capable de faire contact avec la couche (64) pulvérisée à chaud, et dans lequel on forme un espace (s) entre la couche (64) pulvérisée à chaud et la surface (62a) de contact du premier corps (62) de soupape ou la surface (58a) d'extrémité du champignon (58) ayant la partie (92; 92a) inégale.

12. Procédé de fabrication d'une soupape (32) à champignon suivant la revendication 10 ou 11,
dans lequel le stade (S10) du pulvérisation à chaud comprend la formation de la couche (64) pulvérisée à chaud sur au moins une partie de la surface (58a) d'extrémité du champignon (58) ou sur la surface (62a) de contact du premier corps (62) de soupape par une pulvérisation à grande vitesse par combustion de combustible et d'oxygène.
